(19)

Europäisches
Patentamt
European
Patent Office
Office européen
des brevets

(11) **EP 1 895 207 A1**

(12) **EUROPEAN PATENT APPLICATION**
published in accordance with Art. 153(4) EPC

(43) Date of publication:
**05.03.2008 Bulletin 2008/10**

(21) Application number: **06766935.8**

(22) Date of filing: **20.06.2006**

(51) Int Cl.:
*F16J 15/10* *(2006.01)*

(86) International application number:
**PCT/JP2006/312274**

(87) International publication number:
**WO 2006/137372 (28.12.2006 Gazette 2006/52)**

(84) Designated Contracting States:
**CH DE FR LI NL**

(30) Priority: **24.06.2005 JP 2005184513**

(72) Inventor: **NAMEKI, Hideto c/o NOK Corporation 2089,**
**8692231 Kumamoto; (JP)**

(71) Applicant: **NOK Corporation**
**Minato-ku**
**Tokyo 105-8585 (JP)**

(74) Representative: **TBK-Patent**
**Bavariaring 4-6**
**80336 München (DE)**

(54) **SEALING STRUCTURE**

(57)      A sealing structure for performing sealing by a seal ring (3) installed in a dovetail groove (12), in which the seal ring (3) is less likely to come out from the dovetail groove (12), the seal ring (3) is easily installed in the dovetail groove (12), particles are less likely to be produced, and the seal ring (3) is prevented from being erroneously installed. The seal ring, made of a rubber-like elastic material, is installed in the dovetail groove (12), and the seal ring (3) has a convex bottom section (3a) made to be in intimate contact with a groove bottom (12c), side projection sections (3b, 3c) formed on both sides of the bottom section and made to be in intimate contact with inner slope surfaces (12d, 12e) of the dovetail groove (12), and a head section (3d) formed in a convex shape, the head section projecting between those ends of both side projection sections (3b, 3c) that are on the side opposite the bottom section (3a), the head section being exposed to the outside of the dovetail groove (12). The width $W_3$ of the head section (3d) is smaller than the width $W_1$ between groove shoulders (12a, 12b), and the width $W_4$ between the apexes of the side projection sections (3b, 3c) is greater than the width $W_1$.

**FIG. 4**

## Description

## BACKGROUND OF THE INVENTION

### Field of the Invention

The present invention relates to a technique preferably utilized as a sealing means of a chamber or the like used in manufacturing, for example, a semiconductor, a liquid crystal device or the like, and to a sealing structure in which a seal ring is installed to a dovetail groove formed in one part of parts opposing to each other and sealing between opposing surfaces of the parts is executed by the seal ring.

### Description of the Conventional Art

In a semiconductor manufacturing apparatus and a manufacturing apparatus of a liquid crystal product, a working process of a silicon wafer necessary for manufacturing a semiconductor device and a manufacturing process of a liquid crystal glass are executed under a vacuum environment by utilizing various vacuum treatment systems. As a sealing structure for sealing an opening and closing portion such as a gate valve, a slit valve, a chamber lid or the like in a vacuum chamber for creating the vacuum environment mentioned above, there has been employed a structure in which a seal ring interposed between opposing parts to each other at the opening and closing portion is held to a dovetail groove formed in one part, and typical conventional arts thereof are disclosed in the following patent documents 1 to 3.

Patent Document 1: Japanese Unexamined Patent Publication No. 2004-176834

Patent Document 2: Japanese Unexamined Patent Publication No. 2003-014126

Patent Document 3: Japanese Unexamined Patent Publication No. 2005-076864

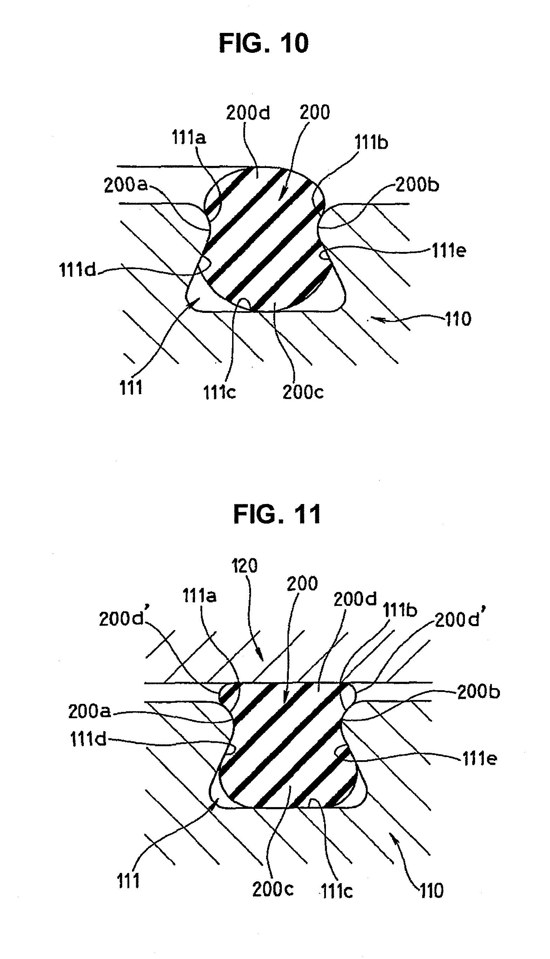

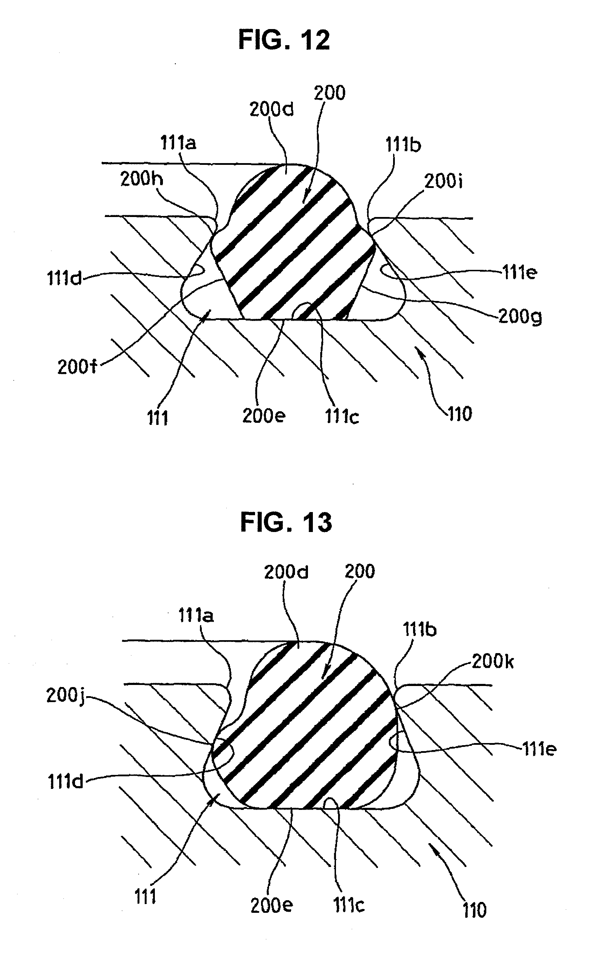

Fig. 10 is a cross sectional view showing a sealing structure described in the patent document 1 as the conventional art, Fig. 11 is a cross sectional view showing a state in which a seal ring in Fig. 10 is compressed, Fig. 12 is a cross sectional view showing a sealing structure described in the patent document 2 as another conventional art, and Fig. 13 is a cross sectional view showing a sealing structure described in the patent document 3 as another conventional art.

First, in the sealing structure shown in Fig. 10 (the patent document 1), reference numeral 110 denotes a first member constituting a vacuum chamber or the like, in which a dovetail groove 111 is formed along an outer periphery of an opening portion (not shown) . The dovetail groove 111 has a pair of inner slope surfaces 111d and 111e inclined in such a manner that groove widths at the side of groove shoulders 111a and 111b are relatively narrow and groove widths at the side of a groove bottom 111c are relatively wide.

A seal ring 200 made of a rubber-like elastic material is formed in a pinched cross sectional shape with concave portions 200a and 200b formed on an inner peripheral surface and an outer peripheral surface, and a base portion 200c having a relatively large volume and a head portion 200d having a relatively small volume are formed at the both sides of the concave portions 200a and 200b. Further, the concave portions 200a and 200b are fitted to the groove shoulders 111a and 111b, a bottom surface of the base portion 200c is brought into close contact with the groove bottom 111c, and the head portion 200d protruding from the dovetail groove 111 is brought into close contact with a second member 120 arranged so as to be movable forward and backward with respect to the first member 110, and the seal ring is suitably compressed between the second member 120 and the groove bottom 111c.

Further, in a sealing structure shown in Fig. 12 (the patent document 2), the seal ring 200 has a flat bottom surface 200e brought into contact with the groove bottom 111c of the dovetail groove 111, a pair of slope surfaces 200f and 200g rising up in a diagonally outer direction from both sides thereof, shoulder portions 200h and 200i respectively formed in leading ends thereof and brought into contact with inner sides of the groove shoulders 111a and 111b (inner slope surfaces 111d and 111e), and a head portion 200d formed in a semicircular arc convex surface shape from a portion between both the shoulder portions 200h and 200i so as to protrude from a portion between the shoulder grooves 111a and 111b.

Further, in a sealing structure shown in Fig. 13 (the patent document 3), the seal ring 200 is formed in an asymmetrical cross sectional shape with respect to a groove width direction of the dovetail groove 111, that is, the seal ring has a flat bottom surface 200e brought into contact with the groove bottom 111c of the dovetail groove 111, an intermediate shoulder portion 200j brought into contact with an intermediate depth position of one inner slope surface 111d in the dovetail groove 111, a convex surface shaped side surface 200k at an opposite side, and a head portion 200d formed in an asymmetrical convex surface shape with respect to the groove width direction of the dovetail groove 111 so as to protrude from the portion between the groove shoulders 111a and 111b.

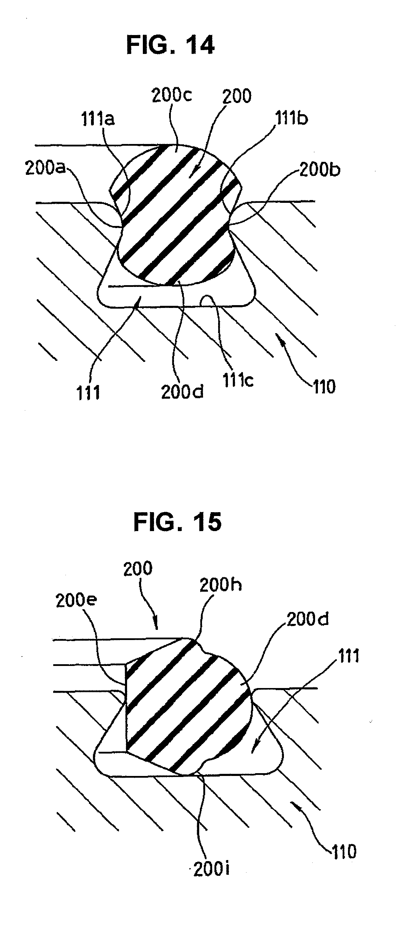

In accordance with the sealing structures mentioned above, even if the head portion 200d of the seal ring 200 sticks to the second member 120 shown in Fig. 11, it is possible to effectively prevent the seal ring 200 from getting out of the dovetail groove 111 in accordance with the opening and closing operation of the second member 120. However, there is pointed out a problem that the seal ring 200 is installed to the dovetail groove 111 in an erroneous attitude or a load necessary for compressing the seal ring 200 is enlarged. Figs. 14, 15 and 16 are cross sectional views showing erroneously installed states of the seal rings in accordance with the conventional sealing structures.

First, in accordance with the sealing structure in Fig. 10 (patent document 1), since the seal ring 200 is fitted to the grove shoulders 111a and 111b of the dovetail groove 111 at the concave portions 200a and 200b, the head portion 200d of the seal ring 200 is deformed so as to bulge and be bitten between the first and second members 110 and 120 at a time of being exposed to a load from the second member 120 as shown in Fig. 11, whereby the compression reaction force becomes high. Accordingly, it appears that a great compression load is necessary. Further, a rubber crack is generated at a portion 200d' bitten between the first and second members 110 and 120, whereby there is a risk that a deterioration of a sealing performance is caused. Further, since a stress becomes higher at a contact portion between the groove shoulders 111a and 111b, a contact portion with the groove shoulders 111a and 111b wears by repeatedly opening and closing the second member 120, so that there is a risk that harmful particles for manufacturing the semiconductor and the liquid crystal product tend to be generated.

Further, in accordance with the sealing structure, since the base portion 200c and the head portion 200d of the seal ring 200 are both formed as circular arc surfaces and have the similar shapes, erroneous installation is hardly noticed in appearance even if they are erroneously installed inversely as shown in Fig. 14. Further, since the fitting of the concave portions 200a and 200b to the groove shoulders 111a and 111b makes resistance even in the process of erroneous installation similarly to the time of installation in the normal attitude, the erroneous installation is hardly noticed. Further, in the case of being erroneously installed inversely as mentioned above, there is generated a state in which the head portion 200d floats up. Therefore, the compression for sealing can not be normally executed, and it is impossible to secure a desired sealing performance.

Next, in accordance with the sealing structure in Fig. 12 (the patent document 2), since the bottom surface 200e of the seal ring 200 is formed flat for preventing a torsion within the dovetail groove 111, a load necessary for compressing the seal ring 200 becomes larger in comparison with the structure in which the bottom surface is formed as a circular arc surface like an 0-ring. Further, as shown in Fig. 15, there is a risk that the seal ring is erroneously installed to the dovetail groove 111 in a state of falling sideways.

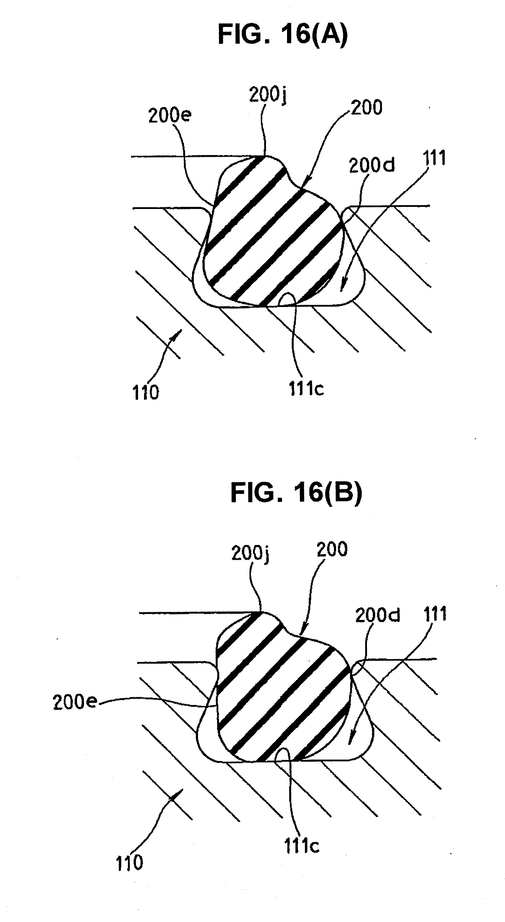

Further, since the bottom surface 200e of the seal ring 200 is also flat in Fig. 13 (the patent document 3), a load necessary for compressing the seal ring 200 becomes large, and there is a risk that the seal ring 200 is erroneously installed to the dovetail groove 111 in an inclined state, as shown in Fig. 16A or 16B.

## SUMMARY OF THE INVENTION

## Problem to be Solved by the Invention

The present invention is made by taking the points mentioned above into consideration, and a technical object of the present invention is to provide a sealing structure for sealing by a seal ring installed to a dovetail groove, in which the seal ring is hardly fallen away from the dovetail groove, the seal ring is prevented from being twisted in accordance with the opening and closing operation, the seal ring is easily installed to the dovetail groove, particles are hardly generated, the torsion and the erroneous installation are not caused at a time of installing the seal ring, and an excessive compression load is not necessary.

## Means for Solving the Problem

As a means for effectively solving the technical problem mentioned above, in accordance with a first aspect of the present invention, there is provided a sealing structure, wherein a seal ring made of a rubber-like elastic material is installed to a dovetail groove with inner slope surfaces inclined toward an inner side of the groove, the seal ring has a circular arc convex surface shaped bottom portion brought into close contact with a groove bottom of the dovetail groove, side surface protruding portions formed at both sides thereof and brought into close contact or near contact with to the inner slope surfaces, and a head portion formed in a manner of protruding in a convex surface shape between end portions at the opposite side to the bottom portion of the side surface protruding portions at both sides and being exposed to the outside of the dovetail groove, a width of the head portion is smaller than a width between the groove shoulders, and a width between peaks of the side surface protruding portions is larger than a width between the groove shoulders of the dovetail groove.

In accordance with a second aspect of the present invention, there is provided a sealing structure as recited in the first aspect, wherein a height between peaks of the bottom portion and the head portion in the seal ring is larger than the width between the groove shoulders of the dovetail groove.

In accordance with a third aspect of the present invention, there is provided a sealing structure as recited in the first aspect, wherein a height from peaks of the side surface protruding portions at both sides in the seal ring to the peak of the head portion is larger than a depth from a protruding ends in a width direction of the groove shoulders to the groove bottom.

In accordance with a fourth aspect of the present invention, there is provided a sealing structure as recited in the first aspect, wherein boundaries between the side surface protruding portions and the head portion in the seal ring are concaved inside than tangent lines frompeaks of the side surface protruding portions to the head portion.

## Effect of the Invention

In accordance with the sealing structure on the basis of the first aspect of the present invention, since the width between the peaks of the side surface protruding portions in the seal ring is larger than the width between the groove shoulders of the dovetail groove, the side surface protruding portions interfere with the inner slope surfaces of the dovetail groove at a time of being displaced in such a direction as to get out of the dovetail groove, thereby preventing the seal ring from getting out of the dovetail groove. Further, it is possible to prevent torsion at a time of installing and torsion in accordance with the opening and closing operation by the side surface protruding portions brought into close contact or near contact with the inner slope surfaces. Further, since the width of the head portion of the seal ring is smaller than the width between the groove shoulders, biting caused by bulging deformation of the head portion to the portion between both the members and the pressure contact with the groove shoulders are hardly generated, at a time of compressing the seal ring between the member in which the dovetail groove is formed, and the member opposing thereto. Besides, since the head portion and the bottom portion of the seal ring are both formed in the circular arc convex shape, it is possible to secure a desired compressing amount at a low load, and it is possible to effectively suppress generation of the particles and torsion of the seal ring.

In accordance with the sealing structure on the basis of the second aspect of the present invention, since the peaks can not pass between the dovetail shoulders of the dovetail groove in a sideways state in which the peak of the bottom portion of the seal ring and the peak of the head portion are directed to both sides in the width direction of the dovetail groove, it is possible to securely prevent the seal ring from being erroneously installed sideways, in addition to the effect obtained by the first aspect.

In accordance with the sealing structure on the basis of the third aspect of the present invention, since the peaks of the side surface protruding portions can not pass through the protruding ends in the width direction of the groove shoulders even if it is intended to install the seal ring to the dovetail groove in a head and bottom inverted state in which the head portion is directed to the groove bottom, it is possible to securely prevent the seal ring from being erroneously installed to the dovetail groove in the head and bottom inverted state, in addition to the effect obtained by the first aspect.

In accordance with the sealing structure on the basis of the fourth aspect of the present invention, since it is possible to bring a relative depression between the side surface protruding portion in the seal ring and the head portion into contact with the groove shoulder and then insert the seal ring into the groove in such a manner as to rotate the bottom portion around the contact portion at a time of installing the seal ring to the dovetail groove, it is possible to easily install the seal ring, in addition to the effect obtained by the first aspect.

## BRIEF EXPLANATION OF DRAWINGS

Fig. 1 is a schematic perspective view showing a semiconductor manufacturing apparatus to which a sealing structure in accordance with the present invention is applied;

Fig. 2 is a schematic perspective view showing of a semiconductor manufacturing apparatus to which the sealing structure in accordance with the present invention is applied, the semiconductor manufacturing apparatus being different from Fig. 1;

Fig. 3 is a cross sectional view showing a preferable embodiment of the sealing structure in accordance with the present invention;

Fig. 4 is an explanatory view showing a relation between a seal ring and a dovetail groove in a first embodiment;

Fig. 5 is a cross sectional view showing a sealed state in accordance with the first embodiment;

Figs. 6A to 6F are is an explanatory views sequentially showing installing processes of the seal ring in the first embodiment.

Fig. 7 is a cross sectional view showing a case that it is intended to install the seal ring 3 in the first embodiment sideways;

Figs. 8A and 8B are cross sectional views showing a case that it is intended to install the seal ring 3 in the first embodiment in a head and tail inverted state;

Fig. 9 is a cross sectional view showing another embodiment of the sealing structure in accordance with the present invention;

Fig. 10 is a cross sectional view showing a sealing structure in accordance with a conventional art;

Fig. 11 is a cross sectional view showing a state in which a seal ring in Fig. 10 is compressed;

Fig. 12 is a cross sectional view showing a sealing structure in accordance with another conventional art;

Fig. 13 is a cross sectional view showing a sealing structure in accordance with another conventional art;

Fig. 14 is a cross sectional view showing an erroneously installed state of the seal ring in the sealing structure in Fig. 10;

Fig. 15 is a cross sectional view showing an erroneously installed state of a seal ring in the sealing structure in Fig. 12; and

Figs. 16A and 16B are cross sectional views showing erroneously installed states of a seal ring in the sealing structure in Fig. 13.

**Description of Reference Numerals**

1 housing
11 opening portion
12 dovetail groove
12a, 12b groove shoulder
12c groove bottom
12d, 12e inner slope surface
13 inner peripheral side member
13a, 14a parting surface
14 outer peripheral side member
2 lid body
3 seal ring
3a bottom portion
3b, 3c side surface protruding portion
3d head portion
3e, 3f depression

## DETAILED DESCRIPTION OF PREFERRED EMBODIMENT

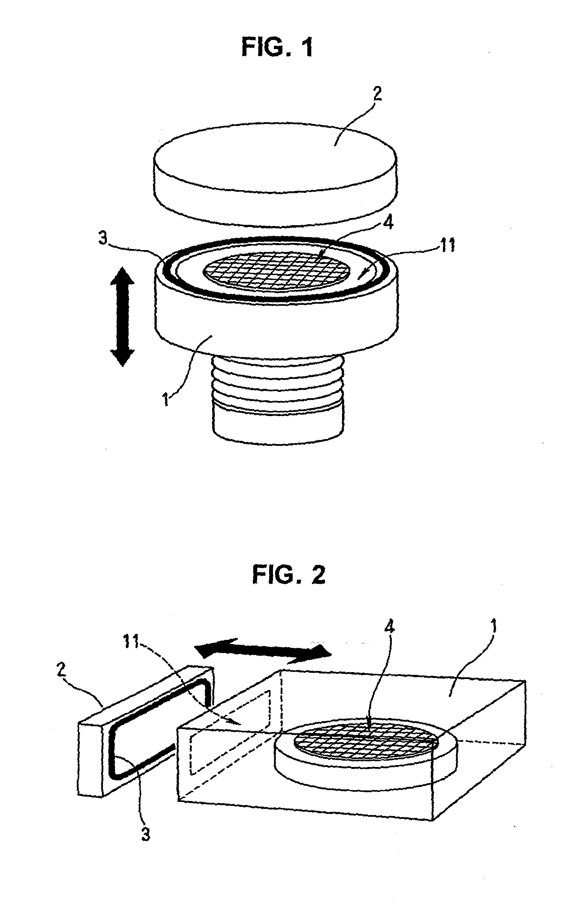

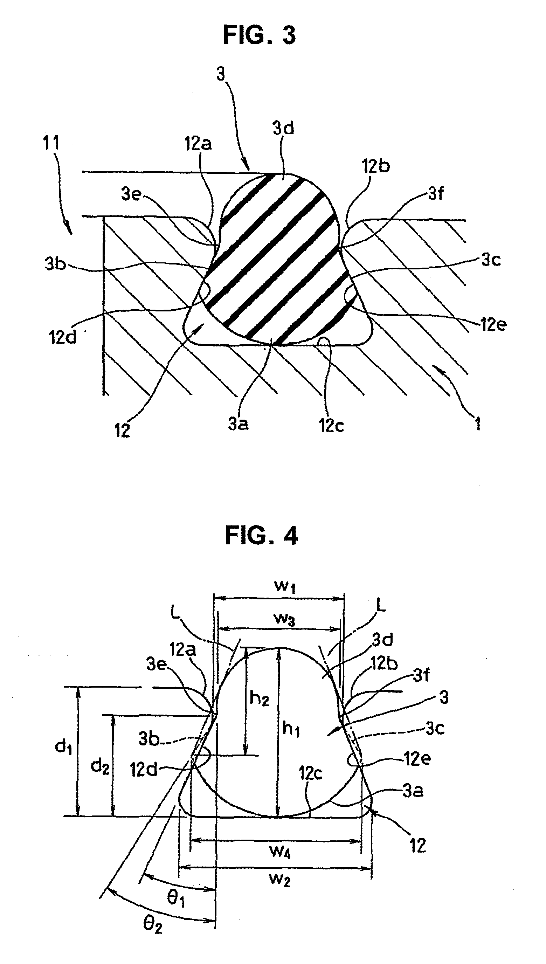

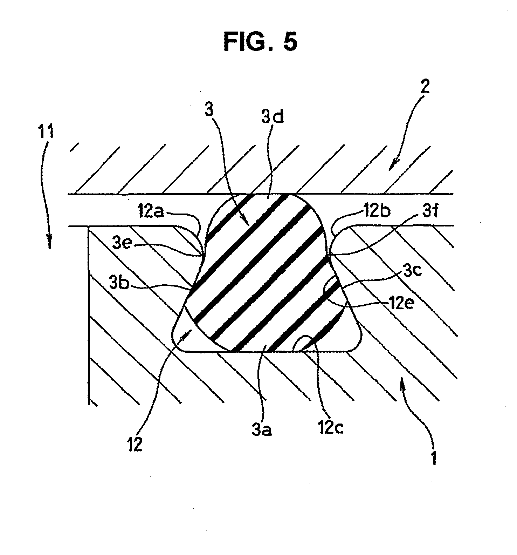

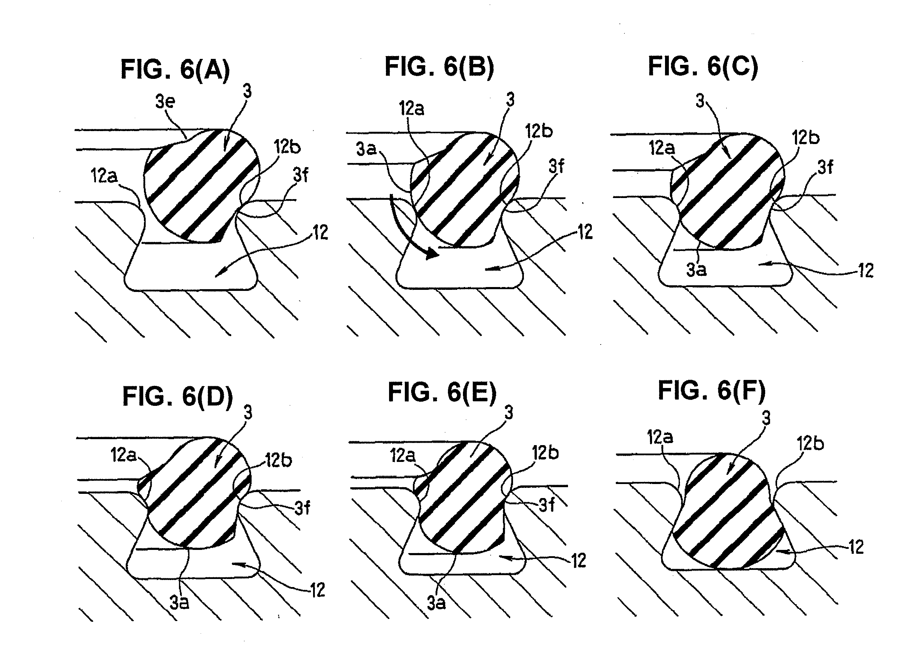

A description will be given below of a sealing structure in accordance with the present invention with reference to the accompanying drawings. First, Figs. 1 and 2 are schematic perspective views showing vacuum chambers for manufacturing a semiconductor to which a sealing structure in accordance with the present invention is applied, Fig. 3 is a cross sectional view showing a preferable first embodiment of the sealing structure in accordance with the present invention, Fig. 4 is an explanatory view showing a relation between a seal ring and a dovetail groove in the first embodiment, Fig. 5 is a cross sectional view showing a sealed state in accordance with the first embodiment, and Fig. 6 is an explanatory view sequentially showing installing processes of the seal ring in the first embodiment.

As shown in Fig. 1, the vacuum chamber for manufacturing the semiconductor is provided with a main body side housing 1 having an opening portion 11 for taking a work 4 such as a semiconductor wafer or the like in and out, and a lid body 2 for opening and closing the opening portion 11, and in a closed state by the lid body 2, a seal ring 3 for holding an outer periphery of the opening portion 11 in a sealed state is installed to a dovetail groove mentioned below formed along an outer periphery of the opening portion 11 in the housing 1 or the lid body 2. In an embodiment described below, it is assumed that the seal ring 3 is installed to the housing 1 side as shown in Fig. 1, for convenience sake.

In a sealing structure in accordance with a first embodiment shown in Fig. 3, a dovetail groove 12 is formed along the outer periphery of the opening portion 11, in the housing 1. The dovetail groove 12 has a pair of inner slope surfaces 12d and 12e inclined in such a manner that a width $w_1$ at the side of groove shoulders 12a and 12b is relatively narrow, and a width $w_2$ at the side of a groove bottom 12c is relatively wide, as shown in Fig. 4. The groove shoulders 12a and 12b are rounded.

The seal ring 3 is formed in an endless shape by a rubber-like elastic material, and has a bottom portion 3a brought into close contact with the groove bottom 12c of the dovetail groove 12 and formed as a circular arc shaped convex surface, side surface protruding portions 3b and 3c formed at both sides thereof and brought into close contact or near contact with the inner slope surfaces 12d and 12e of the dovetail groove 12, and a head portion 3d formed in manner of a protruding between end portions at an opposite side to the bottom portion 3a of the side surface protruding portions 3b and 3c, exposed to the outside of the dovetail groove 12 and formed as a circular arc shaped convex surface, as shown in Fig. 3. Further, the side surface protruding portions 3b and 3c are formed as slope surfaces inclining in directions corresponding to the inner slope surfaces 12d and 12e of the dovetail groove 12, and suitable collapsing margins with respect to the inner slope surfaces 12d and 12e are set by making an angle $\theta_2$ of gradient of the side surface protruding portions 3b and 3c larger than an angle $\theta_1$ of gradient of the inner slope surfaces 12d and 12e of the dovetail groove 12, as shown in Fig. 4.

Boundaries between the side surface protruding portions 3b and 3c and the head portion 3d in the seal ring 3 are formed to have depressions 3e and 3f concaved to an inner side than tangent lines L drawn from peaks (end portions at the side of the bottom portion 3a) of the side surface protruding portions 3b and 3c to the head portion 3d, as shown in Fig. 4. Further, a width $w_3$ of the head portion 3d, in other words, a width $w_3$ between the boundaries (the depressions 3e and 3f) of the side surface protruding portions 3b and 3c and the head portion 3d is made slightly smaller than a width $W_1$ between the groove shoulders 12a and 12b (a width between protruding ends 12a' and 12b' in a width direction of the groove shoulders 12a and 12b), and a width $w_4$ between peaks of the side surface protruding portions 3b and 3c (end portions at the side of the bottom portion 3a) is made larger than the width $w_1$.

A height $h_1$ between the peaks of the bottom portion 3a and the head portion 3d in the seal ring 3 is made larger than the depth $d_1$ of the dovetail groove 12 and the width $w_1$ between the groove shoulders 12a and 12b, and preferably satisfies the following relation.

$$h_1 \geqq 1.1 w_1$$

Further, a height $h_2$ from the peaks (the end portions at the side of the bottom portion 3a) of the side surface protruding portions 3b and 3c at both sides to the peak of the head portion 3d is made larger than a depth $d_2$ from the protruding ends 12a' and 12b' in the width direction of the groove shoulders 12a and 12b to the groove bottom 12c.

In the structure mentioned above, since the head portion 3d is brought into close contact with the lid body 2 in a suitable compression state at a time of closing the opening portion 11 by the lid body 2 as shown in Fig. 5, the seal ring 3 seals the inside of the vacuum chamber shown in Fig. 1 or 2. Further, since both the bottom portion 3a brought into close contact with the groove bottom 12c of the dovetail groove 12 and the head portion 3d brought into close contact with the lid body 2 are formed as the circular arc shaped convex surface, the seal ring 3 is easily collapsed by a small compression load, and a good seal surface is formed.

In detail, when the seal ring 3 is exposed to a compression deformation between the housing 1 (the groove bottom 12c of the dovetail groove 12) and the lid body 2, in such a manner as to reduce the height $h_1$, for example, in the case that the depressions 3e and 3f between the side surface protruding portions 3b and 3c and the head portion 3d are fitted to the groove shoulders 12a and 12b, the seal ring 3 is deformed as shown in Fig. 11 described previously, and a compression stress is concentrated to the head portion 3d. However, in accordance with the present embodiment, since the width $w_3$ of the head portion 3d is smaller than the width $w_1$ between the groove shoulders 12a and 12b, and the depressions 3e and 3f between the side surface protruding portions 3b and 3c and the head portion 3d are in a non-contact and non-fitted state to the groove shoulders 12a and 12b, the stress concentration is not generated in the head portion 3d. Accordingly, it is hard to generate biting due to bulging deformation of the head portion between the housing 1 and the lid body 2 and pressure contact with the groove shoulders. As a result, it is possible to secure a desired compression amount at a low load, and it is possible to effectively suppress generation of particles which are harmful for the manufacturing process of the semiconductor, and deterioration of sealing performance caused by rubber crack generated by the biting.

Further, since the side surface protruding portions 3b and 3c are brought into close contact with the inclined surface shaped inner slope surfaces 12d and 12e of the dovetail groove 12 at a suitable surface pressure in the seal ring 3, the seal ring 3 does not get out of the dovetail groove 12 by being pulled by the lid body 2 at a time of opening the lid body 2, even if the head portion 3d is stuck to the lid body 2 on the basis of a pressure sensitive adhesion characteristic of the rubber. Further, torsion and fall are not generated within the dovetail groove 12.

In order to install the seal ring 3 to the dovetail groove 12, first as shown in Fig. 6A, the seal ring 3 is inclined (twisted) on an illustrated cross section in such a manner as to bring one depression 3f or a portion close thereto of the seal ring 3 into contact with the one rounded surface shape groove shoulder 12b of the dovetail groove 12.

Next, as shown in Fig. 6B, the bottom portion 3a formed as the circular arc shaped convex surface of the seal ring 3 is inserted into the dovetail groove 12 in such a manner as to slip on the other rounded surface shaped groove shoulder 12a while being suitably exposed to the deformation as shown in Figs. 6C → 6D → 6E, by rotating the seal ring 3 on the illustrated cross section in a direction of cancelling the twist around the contact portion between the depression 3f or the portion close thereto and the one groove shoulder 12b of the dovetail groove 12.

Further, an installed state shown in Fig. 6F is achieved by slipping down the top portion of the side surface protruding portion 3b into the dovetail groove 12 beyond the groove shoulder 12a, from a state shown in Fig. 6E. At this time, since the side surface protruding portions 3b and 3c are fitted to the inner slope surfaces 12d and 12e of the dovetail groove 12 at the suitable surface pressure, it is possible to automatically position the seal ring 3 in such manner that the height direction of the seal ring 3 becomes approximately in parallel to the depth direction of the dovetail groove 12. Accordingly, the seal ring 3 is smoothly and accurately installed to the dovetail groove 12.

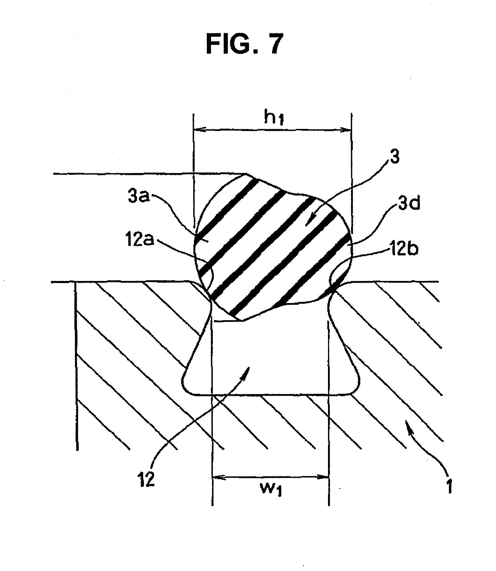

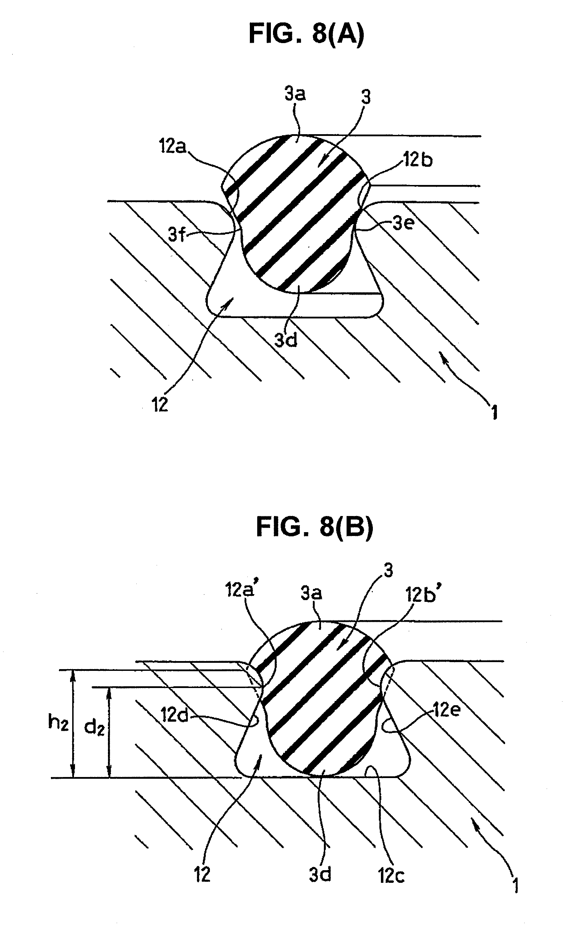

In this case, Fig. 7 is a cross sectional view showing a case that the seal ring 3 is intended to be installed sideways, and Fig. 8 is a cross sectional view showing a case that the seal ring 3 is intended to be installed in a head and bottom inverted direction.

In other words, since the seal ring 3 in accordance with this embodiment is structured such that the height $h_1$ between the peak of the bottom portion 3a and the peak of the head portion 3d is made larger than the width $w_1$ between the groove shoulders 12a and 12b, and preferably made to be 1.1 times or more of the width $w_1$, the seal ring 3 can not pass through the portion between the groove shoulders 12a and 12b in the sideways state in which the bottom portion 3a and the head portion 3d are directed to both sides in the width direction of the dovetail groove 12, as shown in Fig. 7. Accordingly, it is possible to prevent the seal ring 3 from being erroneously installed to the dovetail groove 12 sideways.

Further, since the width $w_3$ between the depressions 3e and 3f is equal to the width of the head portion 3d, and is slightly smaller than the width $w_1$ between the shoulder grooves 12a and 12b, the depressions 3e and 3f are not fitted to the groove shoulders 12a and 12b even if it is intended to install the seal ring 3 in the inverted direction, as shown in Fig. 8A. Accordingly, resistance (installation feeling) is not generated by the depressions 3e and 3f being fitted to the groove shoulders 12a and 12b, and thereby it is possible to prevent the seal ring 3 from being erroneously installed inversely to the dovetail groove 12.

Further, even if it is intended to forcibly compress the seal ring 3 into the dovetail groove 12 in the inverted state as shown in Fig. 8B, the head portion 3d comes to a contact state with the groove bottom 12d before the peaks (the end portions at the side of the bottom portion 3a) of the side surface protruding portions 3b and 3c get over the protruding ends 12a' and 12b' in the width direction of the groove shoulders 12a and 12b toward the side of the inner slope surfaces 12d and 12e, because a relation $h_2 > d_2$ is established. Accordingly, since the peaks of the side surface protruding portions 3b and 3c are not fitted to the inner slope surfaces 12d and 12e beyond the protruding ends 12a' and 12b' in the width direction of the groove shoulders 12a and 12b formed as the rounded surface, it is possible to prevent the seal ring 3 from being erroneously installed inversely to the dovetail groove 12.

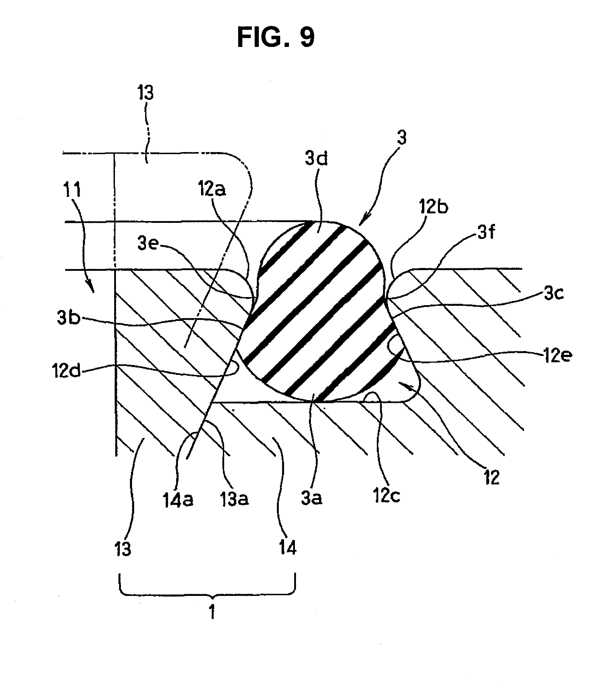

Next, Fig. 9 is a cross sectional view showing another embodiment of the sealing structure in accordance with the present invention. This embodiment is different from the first embodiment mentioned above in a point that the dovetail groove 12 is formed along a portion between an inner peripheral side member 13 and an outer peripheral side member 14 which are bonded so as to be separable from each other, in other words, the housing 1 is divided into the inner peripheral side member 13 and the outer peripheral side member 14 along the dovetail groove 12.

In detail, a parting surface 13a from the outer peripheral side member 14 in the inner peripheral side member 13 of the housing 1 is formed as an extension surface of the inner slope surface 12d at one side (the inner peripheral side) in the dovetail groove 12. Further, a parting surface 14a of the outer peripheral side member 14 brought into close contact and joined with the parting surface 13a is formed as a corresponding slope surface.

In other words, the dovetail groove 12 is constituted by an inner slope surface 12d formed on the inner peripheral side member 13 so as to be continuous with the parting surface 13a on the outer periphery of the inner peripheral side member 13, a flat groove bottom 12c extending in a groove width direction from the parting surface 14a of the outer peripheral side member 14, and an inner slope surface 12e rising up from an end portion at an outer peripheral side of the groove bottom 12c so as to be inclined symmetrically with the inner slope surface 12d, and is structured such that the groove shoulders 12a and 12b are formed as the rounded surfaces.

The structure of the seal ring 3 is the same as Fig. 3, and a dimensional relation between the dovetail groove 12 and the seal ring 3 is basically the same as Fig. 4.

Accordingly, in accordance with a second embodiment shown in Fig. 9, it is possible to achieve the same effect as that of the first embodiment mentioned above. In addition, since the housing 1 can be divided into the inner peripheral side member 13 and the outer peripheral side member 14 along the dovetail groove 12, it is possible to easily install the seal ring 3 to the dovetail groove 12 without forcibly deforming the seal ring 3 between the groove shoulders 12a and 12b at a time of installing the seal ring 3, by previously separating the inner peripheral side member 13 and the outer peripheral side member 14, arranging the seal ring 3 on the groove bottom 12c formed at the outer peripheral side member 14 side, and joining the inner peripheral side member 13 with the outer peripheral side member 14 so as to assemble the housing 1, as shown by a two-dot chain line in the figure.

Further, the seal ring 3 which is once installed to the dovetail groove 12 can be detached from the dovetail groove 12 by separating the inner peripheral side member 13 and the outer peripheral side member 14.

## Industrial Applicability

The present invention can be preferably utilized as the sealing means of the chamber or the like used in manufacturing, for example, the semiconductor, the liquid crystal device or the like, as mentioned above, and is useful for preventing the seal ring from falling away from the dovetail groove, or preventing the torsion of the seal ring, or making it easy to install the seal ring to the dovetail groove, or suppressing generation of particles, or preventing erroneous installation of the seal ring, or reducing the compression load of the seal ring.

## Claims

1. A sealing structure, wherein a seal ring (3) made of a rubber-like elastic material is installed to a dovetail groove (12) with inner slope surfaces (12d, 12e) inclined toward an inner side of the groove, the seal ring (3) has a convex surface shaped bottom portion (3a) brought into close contact with a groove bottom (12c) of said dovetail groove (12), side surface protruding portions (3b, 3c) formed at both sides thereof and brought into close contact or near contact with said inner slope surfaces (12d, 12e), and a head portion (3d) formed in a manner of protruding in a circular arc convex surface shape between end portions at the opposite side to said bottom portion (3a) of the side surface protruding portions (3b, 3c) at both sides and being exposed to the outside of said dovetail groove (12), a width ($w_3$) of the head portion (3d) is smaller than a width ($w_1$) between said groove shoulders (12a, 12b), and a width ($w_4$) between peaks of said side surface protruding portions (3b, 3c) is larger than a width ($w_1$) between the groove shoulders (12a, 12b) of said dovetail groove (12).

2. A sealing structure as claimed in claim 1, wherein a height ($h_1$) between peaks of the bottom portion (3a) and the head portion (3d) in the seal ring (3) is larger than the width ($w_1$) between the groove shoulders (12a, 12b) of the dovetail groove (12).

3. A sealing structure as claimed in claim 1, wherein a height ($h_2$) from peaks of the side surface protruding portions (3b, 3c) at both sides in the seal ring (3) to the peak of the head portion (3d) is larger than a

depth (d$_2$) from a protruding ends (12a', 12b') in a width direction of the groove shoulders (12a, 12b) to the groove bottom (12c).

4. A sealing structure as claimed in claim 1, wherein boundaries between the side surface protruding portions (3b, 3c) and the head portion (3d) in the seal ring (3) are concaved inside than a tangent lines (L) from peaks of said side surface protruding portions (3b, 3c) to said head portion (3d) so as to form a depressions (3e, 3f).

# FIG. 1

# FIG. 2

## FIG. 3

## FIG. 4

# FIG. 5

FIG. 6(A)

FIG. 6(B)

FIG. 6(C)

FIG. 6(D)

FIG. 6(E)

FIG. 6(F)

# FIG. 7

# FIG. 8(A)

# FIG. 8(B)

EP 1 895 207 A1

# FIG. 9

15

## FIG. 10

## FIG. 11

## FIG. 12

## FIG. 13

## FIG. 14

## FIG. 15

## FIG. 16(A)

## FIG. 16(B)

**INTERNATIONAL SEARCH REPORT**

| International application No. |
|---|
| PCT/JP2006/312274 |

A. CLASSIFICATION OF SUBJECT MATTER
*F16J15/10(2006.01)i*

According to International Patent Classification (IPC) or to both national classification and IPC

B. FIELDS SEARCHED

Minimum documentation searched (classification system followed by classification symbols)
F16J15/10

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2004-176834 A  (NOK Corp.),<br>24 June, 2004 (24.06.04),<br>Full text; all drawings<br>(Family: none) | 1,2,4<br>3 |
| Y<br>A | JP 2000-356267 A  (Mitsubishi Cable Industries,<br>Ltd., SMC Corp.),<br>26 December, 2000 (26.12.00),<br>Full text; all drawings<br>& US 6523833 B1 | 1,2,4<br>3 |
| Y<br>A | JP 2003-014126 A  (Nippon Valqua Industries,<br>Ltd.),<br>15 January, 2003 (15.01.03),<br>Full text; all drawings<br>& WO 2003/004912 A1 | 1,2,4<br>3 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>18 July, 2006 (18.07.06) | Date of mailing of the international search report<br>25 July, 2006 (25.07.06) |
|---|---|
| Name and mailing address of the ISA/<br>Japanese Patent Office | Authorized officer |
| Facsimile No. | Telephone No. |

Form PCT/ISA/210 (second sheet) (April 2005)

**EP 1 895 207 A1**

**INTERNATIONAL SEARCH REPORT**

International application No.

PCT/JP2006/312274

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 3-279058 A  (Takata Corp.),<br>10 December, 1991 (10.12.91),<br>Fig. 3<br>& GB 2242347 A            & FR 2660265 A1<br>& DE 4108497 A1 | 1,2,4<br>3 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004176834 A
- JP 2003014126 A
- JP 2005076864 A